# EUROPEAN PATENT SPECIFICATION

(11) **EP 3 260 725 B1**
(45) Date of publication and mention of the grant of the patent: **08.05.2019**
(21) Application number: 16465514.4
(22) Date of filing: 21.06.2016
(51) Int. Cl.: F16F 1/18, F16F 1/26, F16F 1/368

(54) **LEAF SPRING ASSEMBLY**
BLATTFEDERBAUGRUPPE
ASSEMBLAGE DE RESSORT À LAME

(43) Date of publication of application: 27.12.2017
(73) Proprietor: Continental Automotive GmbH, 30165 Hannover (DE)
(72) Inventor: Lapugean, Alexandru, 300715 Timisoara (RO)
(74) Representative: Reuter, Andreas

(56) References cited:
- EP-A1- 0 834 272
- FR-A- 1 034 973
- FR-A1- 2 218 070
- JP-A- H05 341 378
- JP-A- H05 341 379
- NL-A- 7 302 690
- US-A- 3 607 279
- US-A- 4 772 218
- US-A- 5 448 324
- US-A- 5 676 354

## Description

The invention relates to a leaf spring assembly.

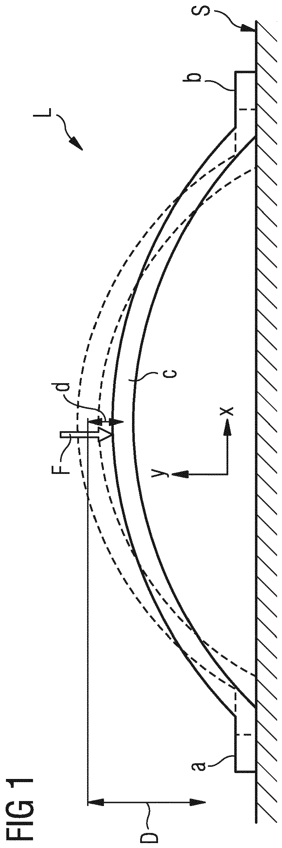

Leaf springs are used in numerous applications to provide an elastic or resilient biasing force. An example of a typical leaf spring L is illustrated in Figure 1. The leaf spring L has a curved elongate form which extends in a longitudinal direction x between a first end a and a second end b supported on a surface S. A central portion c of the leaf spring L forms a loading region at which an external force F is applied. Upon application of a load force F, the curved leaf spring L is compressed towards the supporting surface S with the central portion c undergoing a displacement d in a vertical direction y as the ends a, b of the leaf spring L move along the surface S in the horizontal direction x.

Where the leaf spring L is required to undergo a substantial displacement D towards the support surface S but then return and maintain a smaller displacement d in service, competing or contrary requirements arise. On the one hand, the biasing force of the leaf spring L may not be so high as to prohibit a relatively easy and reliable deformation of the spring L over the large displacement D. On the other hand, the leaf spring L should still provide a relatively high and useful biasing force at the smaller displacement d. This may, for example, be of particular importance for leaf springs which are employed in mounting devices in order to avoid rattling due to vibrations.
Patent Document 1: US 5,448,324 A
Patent Document 2: FR 1034973 A

In view of the above, it is therefore an object of the present invention to provide a new and improved leaf spring assembly which exhibits performance characteristics or spring characteristics which address this problem.

In accordance with the invention, a leaf spring assembly as recited in claim 1 is provided. Various preferred features of the invention are recited in the dependent claims.

According to the invention therefore, the invention provides a leaf spring assembly comprising a leaf spring member and a spring support member which supports the leaf spring member. The leaf spring member has a first end region, a second end region, and a loading region located between the first end region and the second end region which is configured for displacement under loading. The spring support member has a first support portion for contact with the first end region of the leaf spring member and a second support portion for contact with the second end region of the leaf spring member. At least one of the first support portion and the second support portion of the support member provides a guide surface which defines a path of movement of the respective end region during loading of the leaf spring member, and the guide surface is configured to vary a spring characteristic of the assembly along the path of movement. That is, the path of movement of the respective end region defined by the guide surface provides variation in the force-displacement function or characteristic of the leaf spring assembly.

The leaf spring assembly according to the invention has the advantage that the spring characteristic of the assembly does not depend solely on parameters of leaf spring member itself but is also modified or influenced by the design of the guide surface. In this way, the performance or characteristic of the leaf spring assembly can be designed or adapted through a corresponding design of the guide surface. That is, the guide surface influences the force-displacement relationship for the leaf spring assembly.

According to the present invention, at least part of the path of movement follows a surface region of the guide surface in which the respective end region of the leaf spring member has a component of movement in the direction of displacement of the loading region of the leaf spring member. In this way, the displacement of the loading region is not solely a result of a deformation (i.e. bending) of the leaf spring member, but includes the component of movement of the respective end region in the displacement direction as it moves along the path of movement defined by the guide surface. In other words, the guide surface may be configured such that, along at least part of the guide surface, the force required for a given displacement of the loading region of the leaf spring member is reduced compared to the force required for the same displacement via pure bending of the leaf spring member. The force required for a maximum displacement of the leaf spring member can thereby be reduced, as part of the displacement is effected through movement of the respective end region. A less flexible and more stable leaf spring member can thus be used which improves a stability of the leaf spring assembly.

Therefore, the invention provides a leaf spring assembly comprising a leaf spring member and a spring support member which supports the leaf spring member. The leaf spring member is elongate and comprises a first end region and a second end region defining a longitudinal axis there-between. Furthermore, the leaf spring member includes a loading region located between the first end region and the second end region, the loading region being configured for displacement in a direction perpendicular to the longitudinal axis of the leaf spring member. The spring support member comprises a first support portion for contact with the first end region of the leaf spring member and a second support portion for contact with the second end region of the leaf spring member. At least one of the first support portion and the second support portion of the support member defines a path of movement of the respective end region during loading of the leaf spring member, and at least a part of the path of movement includes a component of movement parallel to or in the displacement direction of the loading region.

According to the present invention, a first part of the path of movement of the respective end region of the leaf spring member follows the guide surface along a first surface region in which the end region moves substantially perpendicular to the direction of displacement of the loading region. In this way, an initial stage of operation or actuation of the leaf spring assembly may take place along the first part of the path of movement, and the displacement of the loading region is solely a result of a deformation (i.e. bending) of the leaf spring member.

According to the present invention, a second part of the path of movement follows the guide surface along a second surface region in which the respective end region of the leaf spring member has the component of movement in the displacement direction of the loading region. In this way, a subsequent or later stage of operation or actuation of the leaf spring assembly (i.e. under higher loading) takes place along the second part of the path of movement, and the displacement of the loading region results from a combination of deformation (i.e. bending) of the leaf spring member as well as movement of the end region along the guide surface in the displacement direction.

According to a possible embodiment, the respective end region of the leaf spring member is configured for sliding engagement with the guide surface of said at least one of the first and second support portion. The respective end region preferably comprises a substantially flat section for contact with at least part of the guide surface. The substantially flat section of the end region of the leaf spring member may thus provide for a stable footing or stable contact area with the guide surface. Alternatively, the end region(s) of the leaf spring member may be curved, rounded, or even pointed, to present or provide lower frictional resistance to sliding movement over the guide surface.

According to a possible embodiment, a third part of the path of movement of the respective end region of the leaf spring member follows the guide surface along a third surface region in which the end region moves substantially perpendicular to the direction of displacement of the loading region. In this regard, the third part of the path of movement is arranged to follow the second part, which in turn follows the first part of the path of movement. Along the third part of the path of movement, the displacement of the loading region is again substantially solely a result of deformation or bending of the leaf spring member.

According to a further possible embodiment, the guide surface comprises at least one guiding rail, track, or slot which guides each respective end region of the leaf spring member. That is, the respective end region may be received in and/or held by the guiding rail, track, or slot which thus provides for a confined and controlled movement of the respective end region.

According to a possible embodiment, the first end region of the leaf spring member may be substantially restrained or held against movement at the first support portion. In this embodiment, therefore, the guide surface is provided on the second support portion of the spring support member to define the path of movement of the second end region of the leaf spring member. Thus, only one end region of the leaf spring member is configured to move, whereas the other end region is substantially fixed or restrained. For example, the first end region of the leaf spring member could be pivotally attached to the first support portion thereby preventing translational movement and allowing only a rotational movement of the first end region. In this way, more uniform restoration of the leaf spring member to its initial state may be ensured after the loading force is released.

According to another possible embodiment, both the first end region and the second end region of the leaf spring member may be configured for movement, such that the first support portion may also comprise a guide surface. The geometries of the first and second support portions may be symmetrical, but may optionally also differ from one another.

According to another aspect, the invention provides a holding device for mounting or holding an apparatus or appliance. The holding device comprises a frame or housing configured to receive and hold at least part of the apparatus or appliance, and a leaf spring assembly according to the present invention as described above provided on or in said frame or housing. In this context, the leaf spring member of the leaf spring assembly is configured and arranged for engagement with said at least part of the apparatus or appliance inserted into the frame or housing to exert a biasing force thereon. Although a relatively large displacement of leaf spring member may be necessary for the apparatus or appliance to be inserted or installed in the frame or housing, that displacement can be readily achieved without excessive force during the mounting process by virtue of the spring characteristic obtained via the guide surface. Furthermore, in the mounted or installed state, the apparatus or appliance may be held securely and reliably by the leaf spring member in order to minimize or eliminate rattling with only a relatively small displacement of the leaf spring member.

For a more complete understanding of the invention and the advantages thereof, exemplary embodiments of the invention are explained in more detail in the following description with reference to the accompanying drawing figures, in which like reference characters designate like parts and in which:
- Fig. 1: shows a schematic side view of a known leaf spring member according to the prior art;
- Fig. 2: shows a schematic side view of a leaf spring assembly according to a possible embodiment of the invention in a non-actuated state;
- Fig. 3: shows a schematic side view of the leaf spring assembly in Fig. 2 during an initial stage of operation;
- Fig. 4: shows a schematic side view of the leaf spring assembly in Fig. 2 during a later stage of operation;
- Fig. 5: shows a schematic partial side view of a leaf spring assembly according to one possible embodiment of the invention;
- Fig. 6: shows a schematic partial side view of a leaf spring assembly according to another possible embodiment of the invention;
- Fig. 7: shows a schematic partial side view of a leaf spring assembly according to a further possible embodiment of the invention;
- Fig. 8: shows a schematic plan view of a holding device according to a possible embodiment of the invention with the leaf spring assembly partially compressed to hold an apparatus in a mounted or installed state;
- Fig. 9: shows a cross-sectional view of the holding device of Fig. 8 taken in the direction of the arrows A-A;
- Fig. 10: shows a schematic plan view of the holding device of Fig. 8 with the leaf spring assembly fully compressed for removing (or installing) the apparatus; and
- Fig. 11: shows a cross-sectional view of the holding device of Fig. 10 taken in the direction of the arrows B-B.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

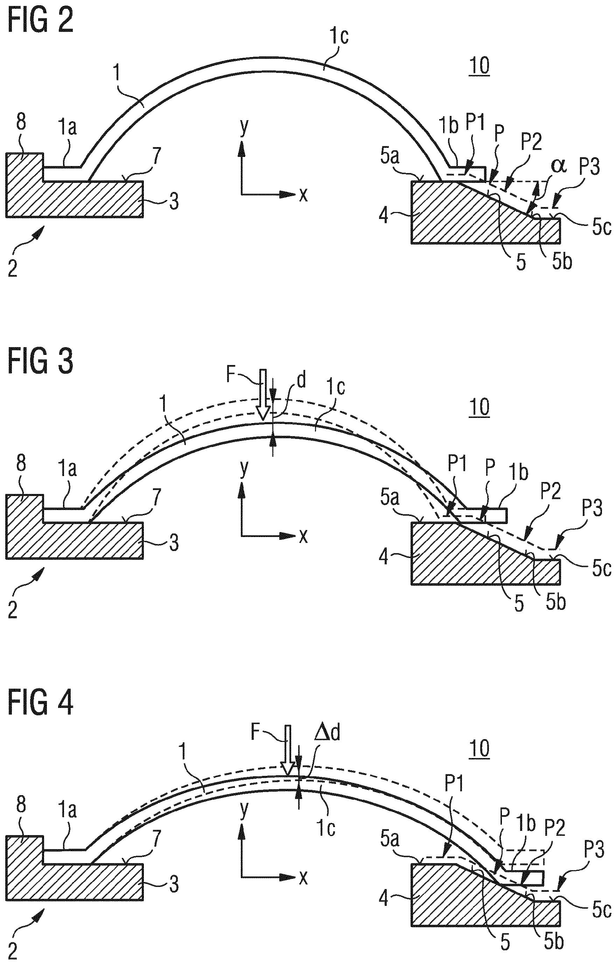

With reference now to Fig. 2 of the drawings, a leaf spring assembly 10 according to an embodiment of the invention is illustrated schematically. The leaf spring assembly 10 comprises a leaf spring member 1 having a curved, elongate form with a first end region 1a, a second end region 1b, and a loading region 1c located between the first end region 1a and the second end region 1b. The leaf spring member 1 may take any desired form, including but not limited to semi-elliptical, elliptical and parabolic shapes. The leaf spring member 1 may be comprised of a metallic material, a plastic material, or a combination of different materials, such as a plastic loading region 1c and metallic first and second end regions 1a, 1b.

The elongate arching leaf spring member 1 provides or defines a longitudinal direction or axis x which extends horizontally in Fig. 2 between the first end region 1a and the second end region 1b in an unloaded state of the leaf spring member 1. The loading region 1c of the leaf spring member 1 is located substantially centrally and is configured for displacement in a generally vertical displacement direction y in Fig. 2 under loading. Thus, the displacement direction y is substantially perpendicular to the longitudinal direction x.

The leaf spring assembly 10 further comprises a spring support member 2 which is configured and arranged to support the leaf spring member 1. The spring support member 2 has a first support portion 3 for contacting and supporting the first end region 1a of the leaf spring member 1 and a second support portion 4 for contacting and supporting the second end region 1b of the leaf spring member 1. In this regard, the first support portion 3 comprises a surface 7 upon which the first end region 1a of the leaf spring member 1 is supported. An upstanding block or shoulder 8 provided on the first support portion 3 forms an abutment or a stop element which restrains or substantially prevents movement of the first end region 1a of the leaf spring member 1 in the longitudinal direction x during loading. The second support portion 4 of support member 2, on the other hand, provides a guide surface 5 upon which the second end region 1b of leaf spring member 1 is supported for sliding movement and thereby defines a path of movement P of the second end region 1b during loading of the leaf spring member 1.

The leaf spring L shown in Fig. 1 may be considered as having a spring characteristic which expresses a function of, or a relationship between, an applied force or loading force F and a resultant displacement d of the loading region c when the leaf spring L is arranged on the flat support surface S. The spring characteristic of the leaf spring assembly 10 shown in Fig. 2, by contrast, expresses a function of, or relationship between, an applied force or loading force F and a resultant displacement d of the loading region 1c in the displacement direction y. According to the present invention, the spring characteristic of the leaf spring assembly 10 depends not only on the spring characteristic of the leaf spring member 1 itself but also on the specific form or geometry of the guide surface 5. That is to say, on at least part of the path of movement P, the force F applied to the leaf spring member 1 not only generates bending of the leaf spring member 1 (i.e. as characterized by its decreasing curvature), but also a displacement of the second end region 1b in a direction with a component in the displacement direction y, as will be explained below in more detail.

Referring now to Figs. 2 to 4, it will be seen that the guide surface 5 of the second support portion 4 includes a first region 5a substantially parallel to the horizontal surface 7 of the second support portion 4, i.e. substantially parallel to the longitudinal direction x and perpendicular to the displacement direction y. The second end region 1b of the leaf spring member 1 is formed with a flat section for stable sliding contact with the first surface region 5a of the guide surface 5 of the second support portion 4. As seen in Fig. 3, under the application of an initial load force F, the second end region 1b of the spring member 1 moves along the first surface region 5a on a first part P1 of the path of movement that follows the guide surface 5. In this first part P1 of the path of movement P, the end region 1b moves substantially perpendicular to the direction of displacement y, such that the displacement d of the loading region 1c during this initial loading is generated solely through bending of the leaf spring member 1.

As can be clearly seen in Figs. 3 and 4, the guide surface 5 of the second support portion 4 further comprises a second surface region 5b which joins with and forms a continuation from the first surface region 5a. The second region 5b of the guide surface 5 is substantially flat but declines or is angled away from the first surface region 5a. An angle α of inclination of the second region 5b of the guide surface 5 is preferably in the range of about 10 degrees and 45 degrees. Thus, as the load force F increases, the second end region 1b of the leaf spring member 1 moves from the first region 5a of the guide surface into a second part P2 of path of movement P formed by the second surface region 5b of the guide surface, as shown in Fig. 4. In this second part P2 of the movement path P, the second end region 1b of the leaf spring member 1 moves along the second region 5b of the guide surface with a component of movement in the displacement direction y of the loading region 1c. Therefore, further displacement d of the leaf spring member 1 in the loading region 1c in this phase of loading is generated not only through bending of the leaf spring member 1 but also through movement of end region 1b.

Thus, it can be seen that the geometry of the guide surface 5 leads to an additional displacement Δd of the loading region 1c as compared to a respective displacement on a flat surface S in a situation as shown in Figure 1. In this way, the guide surface 5 acts to vary or adapt the spring characteristic of the leaf spring assembly 10 along the second path P2. The spring characteristic of the leaf spring assembly 10 differs from the spring characteristic of the leaf spring member 1.

From Figs. 2 to 4 it will also be noted that guide surface 5 contains a third surface region 5c which joins with and forms a continuation from the second surface region 5b. The third region is again substantially flat and extends substantially parallel to the first region 5a and longitudinal direction x. Therefore, upon application of a greater force F, the second end region 1b of the leaf spring member moves along a third part P3 of the path of movement P following the third surface region 5c of the guide surface 5. In this third part P3 of the path of movement P further displacement d of the leaf spring member 1 in the loading region 1c is again generated solely through bending of the leaf spring member 1.

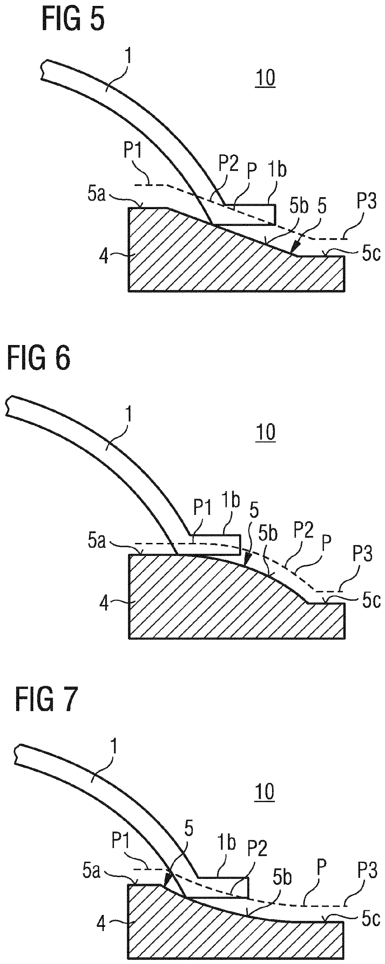

With reference now to Fig. 5, an example of a guide surface 5 of a support portion 4 comprised of flat surface regions 5a, 5b, 5c similar to the embodiment of Figs. 2-4 is illustrated. It will be appreciated, however, that the geometric form of the guide surface 5 is not limited to a combination of flat surfaces. On the contrary, the guide surface 5 may have one or more curved surface regions 5a, 5b, 5c or a combination of flat and curved surface regions 5a-5c. Referring to Fig. 6 of the drawings, an embodiment of a leaf spring assembly 10 is shown in which the guide surface 5 of the support portion 4 comprises a convexly curved second surface region 5b. In this case, the second region 5b of the guide surface 5 may have a circular, elliptical, or parabolic profile. Referring now to drawing Fig. 7, an embodiment of a leaf spring assembly 10 is illustrated in which the guide surface 5 of support portion 4 comprises a concavely curved second surface region 5b. For example, the second region 5b of the guide surface 5 may have a parabolic or hyperbolic surface profile. Furthermore, it will be appreciated that the guide surface 5 may contain more or less than three different regions. For instance, the guide surface 5 could optionally comprise a single curved region; e.g., having a circular, elliptical, or parabolic surface profile.

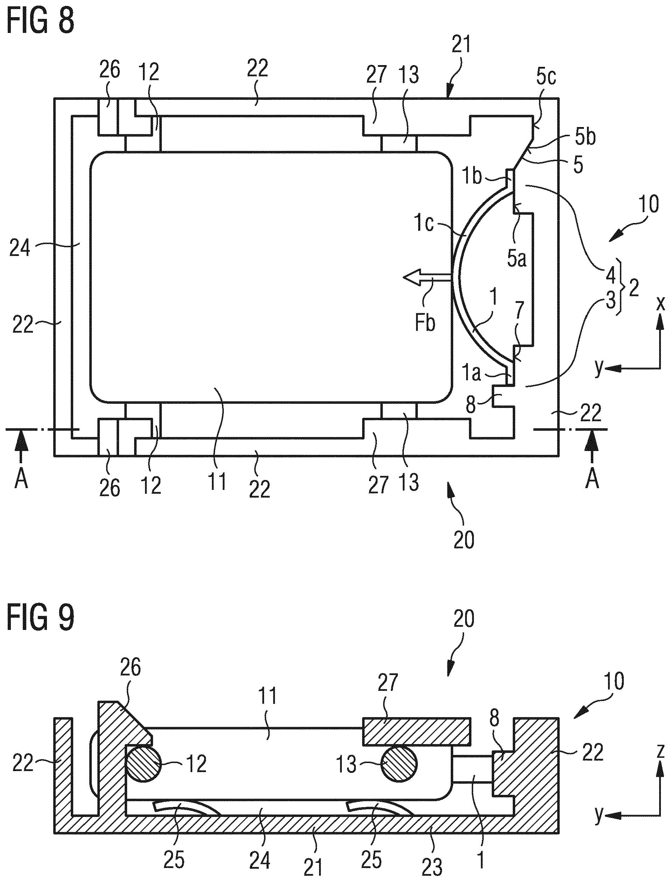

Referring now to drawing Figs. 8 to 11, a holding device 20 according to an embodiment of the invention for mounting an appliance or apparatus 11 is illustrated. The apparatus 11 could, for example, be an electronic device itself or simply a mounting attachment of an appliance which is inserted and held within the holding device 20. The holding device 20 comprises a frame or housing 21 having side panels 22 and a base 23 in a generally rectangular configuration surrounding or enclosing a cavity 24 which is configured to receive and hold at least a part of the apparatus 11.

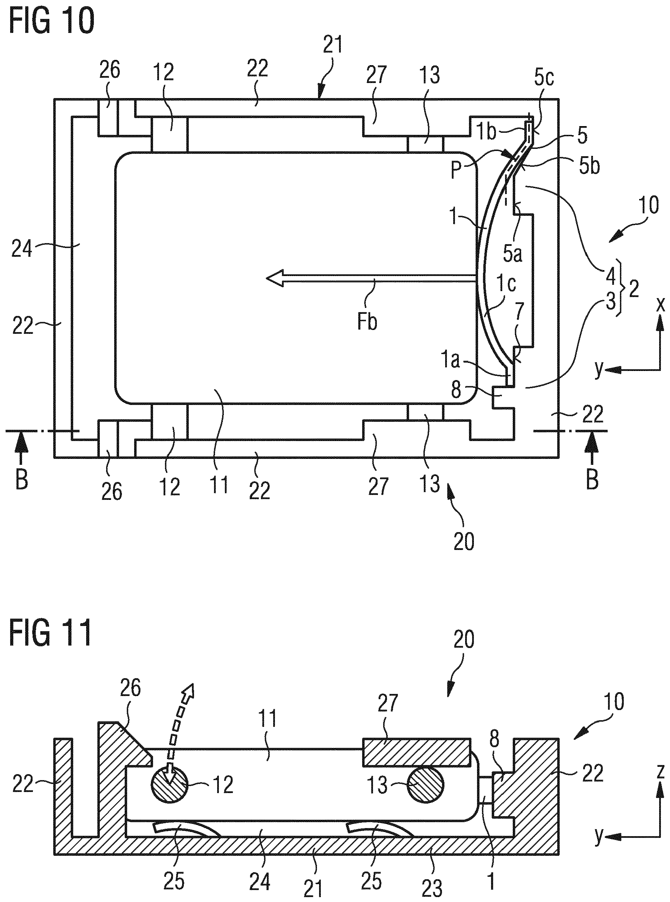

A leaf spring assembly 10, in particular according to one of the embodiments described above, is provided within the frame or housing 21 attached to one of the side panels 22. As seen in Figs. 8 and 10, the support member 2 of the leaf spring assembly 10 may be integrated in the respective side panel 22 of the frame or housing 21. The apparatus 11 includes first connecting elements 12 and second connecting elements 13, which project in the form of cylindrical lugs from opposite sides of the apparatus 11. As seen in Fig. 9, the base 23 of the frame or housing 21 includes spring elements 25 which are configured and arranged to bias the first and second connecting elements 12, 13 in a removal direction z against respective first and second retaining elements 26, 27 provided on opposite side panels 22 of the frame or housing 21. It is to be noted that the removal direction z is perpendicular to both the displacement direction y and the longitudinal direction x of the leaf spring assembly 10. In service, as shown in Fig. 8, the leaf spring member 1 of the leaf spring assembly 10 exerts a counterforce or biasing force Fb on the apparatus 11 which pushes the first connecting elements 12 in the displacement direction y against the first retaining elements 14. Thus, the leaf spring member 1 acts to hold and firmly secure the apparatus 11 within the frame / housing 21.

With reference now to Figs. 10 and 11 of the drawings, the apparatus 11 can be removed from the holding device 20 by applying a force to push the apparatus 11 towards the leaf spring assembly 10, thus compressing the leaf spring member 1 which in turn exerts an increased reaction biasing force Fb on the apparatus 11. As leaf spring member 1 is compressed, the second end region 1b of the leaf spring member 1 follows the guide surface 5 along the path of movement P, as has been described above in detail. In this way, a relatively large displacement of the loading region 1c of leaf spring member 1 may be obtained without requiring application of an excessive force. By compressing leaf spring member 1 in this manner, the first connecting elements 12 move out of engagement with the first retaining elements 26 so that the apparatus 11 can be pivoted around the second connecting lugs 13 - i.e. in the direction of the dashed arrow in Fig. 11 - and then removed from the cavity 24 within the frame or housing 21.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise.

Moreover, the terms "first", "second", "third", etc. are used merely as labels, and are not intended to impose numerical requirements on or to establish a certain ranking of importance of their objects.

### REFERENCE SIGNS

- 1: leaf spring member
- 1a: first end region
- 1b: second end region
- 1c: loading region
- 2: spring support member
- 3: first support portion
- 4: second support portion
- 5: guide surface
- 5a: first surface region
- 5b: second surface region
- 5c: third surface region
- 6: contact surface
- 7: surface
- 8: block
- 10: leaf spring assembly
- 11: appliance or apparatus
- 12: first connecting element
- 13: second connecting element
- 20: holding device
- 21: frame or housing
- 22: side panel
- 23: base
- 24: cavity
- 25: spring element
- 26: first retaining element
- 27: second retaining element
- a: first end
- b: second end
- c: central portion
- d: displacement
- D: substantial displacement
- F: loading force
- Fb: biasing force
- L: leaf spring
- P: path of movement
- P1: first part of the path of movement
- P2: second part of the path of movement
- P3: third part of the path of movement
- S: support surface
- x: longitudinal direction
- y: displacement direction
- z: removal direction
- α: angle of inclination
- Δd: additional displacement

## Claims

1. A leaf spring assembly (10), comprising
a leaf spring member (1) having a first end region (1a), a second end region (1b), and a loading region (1c) which is located between the first end region (1a) and the second end region (1b) and which is configured for displacement in a direction (y) under loading; and
a spring support member (2) which supports the leaf spring member (1), the spring support member (2) having a first support portion (3) for contact with the first end region (1a) of the leaf spring member (1) and a second support portion (4) for contact with the second end region (1b) of the leaf spring member (1);
wherein at least one of the first support portion (3) and the second support portion (4) of the support member (2) provides a guide surface (5) which defines a path of movement (P) of the respective end region (1a, 1b) during loading of the leaf spring member (1), and wherein the guide surface (5) is configured to vary or modify a spring characteristic of the assembly (10) along the path of movement (P), **characterised in that** a first part (P1) of the path of movement (P) of the respective end region (1a, 1b) of the leaf spring member (1) follows the guide surface (5) along a first surface region (5a) in which the end region (1a, 1b) moves substantially perpendicular to the direction of displacement (y) of the loading region (1c), and wherein a second part (P2) of the path of movement (P) follows the guide surface (5) along a second surface region (5b) in which the respective end region (1a, 1b) of the leaf spring member (1) has the component of movement in the displacement direction (y) of the loading region (1c).

2. The leaf spring assembly (10) according to claim 1, wherein a part (P2) of the path of movement (P) follows the guide surface (5) along a surface region (5b) in which the respective end region (1a, 1b) of the leaf spring member (1) has a component of movement in the direction of displacement (y) of the loading region.

3. The leaf spring assembly (10) according to claim 1, wherein the respective end region (1a, 1b) of the leaf spring member (1) is configured for sliding engagement with the guide surface (5) of said at least one of the first and second support portion (3, 4), wherein the respective end region (1a, 1b) preferably comprises a substantially flat section for contact with the first surface region (5a) of the guide surface (5) which defines the first part (P1) of the path of movement (P).

4. The leaf spring assembly (10) according to claim 1 or claim 3, wherein a third part (P3) of the path of movement (P) of the respective end region (1a, 1b) follows the guide surface (5) along a third surface region (5c) in which the end region (1a, 1b) moves substantially perpendicular to the direction of displacement (y) of the loading region (1c), wherein the second part (P2) is located between said first part (P1) and said third part (P3).

5. The leaf spring assembly (10) according to any one of claims 1 to 4, wherein the guide surface (5) comprises at least one guiding rail, track, or slot which guides the respective end region (1a, 1b) of the leaf spring member (1).

6. The leaf spring assembly (10) according to any one of claims 1 to 5, wherein the first end region (1a) of the leaf spring member (1) is substantially confined or held against movement at the first support portion (3), and wherein the guide surface (5) is provided on the second support portion (4) of the spring support member (2) to define the path of movement (P) of the second end region (1b) of the leaf spring member (1).

7. A holding device (20) for mounting an apparatus (11), comprising
a frame or housing (16) configured to receive and hold at least a part of the apparatus (11); and
a leaf spring assembly (10) according to any one of claims 1 to 6 provided on or in said frame or housing (16) ;
wherein the leaf spring member (1) of the leaf spring assembly (10) is configured and arranged for engagement with said at least a part of the apparatus (11) inserted into the frame or housing (16) to exert a biasing force thereon.

## Patentansprüche

1. Blattfederbaugruppe (10), umfassend:
ein Blattfederelement (1), welches einen ersten Endbereich (1a), einen zweiten Endbereich (1b) und einen zwischen dem ersten Endbereich (1a) und dem zweiten Endbereich (1b) befindlichen Belastungsbereich (1c) aufweist und der zur Verschiebung in eine Richtung (y) unter Belastung ausgestaltet ist; und
ein Federträgerelement (2), welches das Blattfederelement (1) trägt, wobei das Federträgerelement (2) einen ersten Trägerteil (3) zum Kontakt mit dem ersten Endbereich (1a) des Blattfederelements (1) und eine zweiten Trägerteil (4) zum Kontakt mit dem zweiten Endbereich (1b) des Blattfederelements (1) aufweist;
wobei der erste Trägerteil (3) und/oder der zweite Trägerteil (4) des Trägerelements (2) eine Führungsoberfläche (5) bereitstellt, welche eine Bewegungsbahn (P) des jeweiligen Endbereichs (1a, 1b) während der Belastung des Blattfederelements (1) definiert, und wobei die Führungsoberfläche (5) dazu ausgestaltet ist, eine Federkennlinie der Baugruppe (10) entlang der Bewegungsbahn (P) zu variieren oder zu modifizieren,
**dadurch gekennzeichnet, dass**
ein erster Teil (P1) der Bewegungsbahn (P) des jeweiligen Endbereichs (1a, 1b) des Blattfederelements (1) der Führungsoberfläche (5) entlang eines ersten Oberflächenbereichs (5a) folgt, in welchem sich der Endbereich (1a, 1b) im Wesentlichen senkrecht zu der Verschiebungsrichtung (y) des Belastungsbereichs (1c) bewegt, und wobei ein zweiter Teil (P2) der Bewegungsbahn (P) der Führungsoberfläche (5) entlang eines zweiten Oberflächenbereichs (5b) folgt, in welchem der jeweilige Endbereich (1a, 1b) des Blattfederelements (1) die Bewegungskomponente in der Verschiebungsrichtung (y) des Belastungsbereichs (1c) aufweist.

2. Blattfederbaugruppe (10) nach Anspruch 1, wobei ein Teil (P2) der Bewegungsbahn (P) der Führungsoberfläche (5) entlang eines Oberflächenbereichs (5b) folgt, in welchem der jeweilige Endbereich (1a, 1b) des Blattfederelements (1) eine Bewegungskomponente in der Verschiebungsrichtung (y) des Belastungsbereichs aufweist.

3. Blattfederbaugruppe (10) nach Anspruch 1, wobei der jeweilige Endbereich (1a, 1b) des Blattfederelements (1) dazu ausgestaltet ist, gleitend in die Führungsoberfläche (5) des ersten und/oder des zweiten Trägerteils (3, 4) einzugreifen, wobei der jeweilige Endbereich (1a, 1b) vorzugsweise einen im Wesentlichen flachen Abschnitt zum Kontakt mit dem ersten Oberflächenbereich (5a) der Führungsoberfläche (5), welcher den ersten Teil (P1) der Bewegungsbahn (P) definiert, umfasst.

4. Blattfederbaugruppe (10) nach Anspruch 1 oder Anspruch 3, wobei ein dritter Teil (P3) der Bewegungsbahn (P) des jeweiligen Endbereichs (1a, 1b) der Führungsoberfläche (5) entlang eines dritten Oberflächenbereichs (5c) folgt, in welchem sich der Endbereich (1a, 1b) im Wesentlichen senkrecht zu der Verschiebungsrichtung (y) des Belastungsbereichs (1c) bewegt, wobei sich der zweite Teil (P2) zwischen dem ersten Teil (P1) und dem dritten Teil (P3) befindet.

5. Blattfederbaugruppe (10) nach einem der Ansprüche 1 bis 4, wobei die Führungsoberfläche (5) mindestens eine Führungsschiene, eine Führungsspur und/oder einen Führungsschlitz als Führung für den jeweiligen Endbereich (1a, 1b) des Blattfederelements (1) umfasst.

6. Blattfederbaugruppe (10) nach einem der Ansprüche 1 bis 5, wobei der erste Endbereich (1a) des Blattfederelements (1) an dem ersten Trägerteil (3) im Wesentlichen bewegungsbeschränkt oder festgehalten wird und wobei die Führungsoberfläche (5) auf dem zweiten Trägerteil (4) des Federträgerelements (2) bereitgestellt ist, um die Bewegungsbahn (P) des zweiten Endbereichs (1b) des Blattfederelements (1) zu definieren.

7. Haltevorrichtung (20) zum Befestigen eines Geräts (11), umfassend:
ein Gestell oder Gehäuse (16), das zum Aufnehmen und Halten mindestens eines Teils des Geräts (11) ausgestaltet ist; und
eine Blattfederbaugruppe (10) nach einem der Ansprüche 1 bis 6, welche auf oder in dem Gestell oder Gehäuse (16) bereitgestellt ist;
wobei das Blattfederelement (1) der Blattfederbaugruppe (10) dazu ausgestaltet und angeordnet ist, in den mindestens einen Teil des Geräts (11), der in das Gestell oder Gehäuse (16) eingesetzt ist, einzugreifen, um auf ihn eine Vorspannungskraft auszuüben.

## Revendications

1. Assemblage de ressort à lames (10), comprenant
un élément de ressort à lames (1) ayant une première région d'extrémité (1a), une deuxième région d'extrémité (1b) et une région de charge (1c) qui est située entre la première région d'extrémité (1a) et la deuxième région d'extrémité (1b), et qui est configurée pour le déplacement dans une direction (y) sous charge ; et
un élément support de ressort (2) qui supporte l'élément de ressort à lames (1), l'élément support de ressort (2) ayant une première partie de support (3) pour le contact avec la première région d'extrémité (1a) de l'élément de ressort à lames (1) et une deuxième partie de support (4) pour le contact avec la deuxième région d'extrémité (1b) de l'élément de ressort à lames (1) ;
au moins une partie parmi la première partie de support (3) et la deuxième partie de support (4) de l'élément support (2) fournissant une surface guide (5) qui définit un chemin de mouvement (P) de la région d'extrémité (1a, 1b) respective pendant la charge de l'élément de ressort à lames (1), et la surface guide (5) étant configurée pour varier ou modifier une caractéristique de ressort de l'assemblage (10) le long du chemin de mouvement (P), **caractérisé en ce que** une première partie (P1) du chemin de mouvement (P) de la région d'extrémité respective (1a, 1b) de l'élément de ressort à lames (1) suit la surface guide (5) le long d'une première région de surface (5a) dans laquelle la région d'extrémité (1a, 1b) se déplace de façon essentiellement perpendiculaire à la direction de déplacement (y) de la région de charge (1c), et une deuxième partie (P2) du chemin de mouvement (P) suivant la surface guide (5) le long d'une deuxième région de surface (5b) dans laquelle la région d'extrémité (1a, 1b) respective de l'élément de ressort à lames (1) a la composante de mouvement dans la direction de déplacement (y) de la région de charge (1c).

2. Assemblage de ressort à lames (10) selon la revendication 1, une partie (P2) du chemin de mouvement (P) suivant la surface guide (5) le long d'une région de surface (5b) dans laquelle la région d'extrémité (1a, 1b) respective de l'élément de ressort à lames (1) a une composante de mouvement dans la direction de déplacement (y) de la région de charge.

3. Assemblage de ressort à lames (10) selon la revendication 1, la région d'extrémité (1a, 1b) respective de l'élément de ressort à lames (1) étant configurée pour l'engagement coulissant avec la surface guide (5) de ladite au moins une partie parmi les première et deuxième parties de support (3, 4), la région d'extrémité (1a, 1b) respective comprenant de préférence une section essentiellement plate pour le contact avec la première région de surface (5a) de la surface guide (5) qui définit la première partie (P1) du chemin de mouvement (P).

4. Assemblage de ressort à lames (10) selon la revendication 1 ou la revendication 3, une troisième partie (P3) du chemin de mouvement (P) de la région d'extrémité (1a, 1b) respective suivant la surface guide (5) le long d'une troisième région de surface (5c) dans laquelle la région d'extrémité (1a, 1b) se déplace de façon essentiellement perpendiculaire à la direction de déplacement (y) de la région de charge (1c), la deuxième partie (P2) étant située entre ladite première partie (P1) et ladite troisième partie (P3).

5. Assemblage de ressort à lames (10) selon l'une quelconque des revendications 1 à 4, la surface guide (5) comprenant au moins un/une rail, piste ou fente de guidage qui guide la région d'extrémité (1a, 1b) respective de l'élément de ressort à lames (1).

6. Assemblage de ressort à lames (10) selon l'une quelconque des revendications 1 à 5, la première région d'extrémité (1a) de l'élément de ressort à lames (1) étant essentiellement enfermée ou son mouvement empêché au niveau de la première partie de support (3), et la surface guide (5) étant fournie sur la deuxième partie de support (4) de l'élément support de ressort (2) pour définir le chemin de mouvement (P) de la deuxième région d'extrémité (1b) de l'élément de ressort à lames (1).

7. Dispositif de maintien (20) pour monter un appareil (11), comprenant
un cadre ou boîtier (16) configuré pour recevoir et maintenir au moins une partie de l'appareil (11) ; et
un assemblage de ressort à lames (10) selon l'une quelconque des revendications 1 à 6, fourni sur ou dans ledit cadre ou boîtier (16) ;
l'élément de ressort à lames (1) de l'assemblage de ressort à lames (10) étant configuré et disposé pour l'engagement avec ladite au moins une partie de l'appareil (11) insérée dans le cadre ou boîtier (16) pour exercer sur celui-ci une force de précontrainte.
